# EUROPÄISCHE PATENTSCHRIFT

(11) **EP 2 932 319 B1**
(45) Veröffentlichungstag und Bekanntmachung des Hinweises auf die Patenterteilung: **23.10.2019**
(21) Anmeldenummer: 13826720.8
(22) Anmeldetag: 26.11.2013
(51) Int. Cl.: G02B 6/12, G02B 6/122, G02B 6/136

(54) **WELLENLEITERANORDNUNG**
WAVEGUIDE ARRANGEMENT
ENSEMBLE DE GUIDES D'ONDES

(30) Priorität: 12.12.2012 DE 102012222898
(43) Veröffentlichungstag der Anmeldung: 21.10.2015
(73) Patentinhaber: Humboldt-Universität zu Berlin, 10099 Berlin (DE); Forschungsverbund Berlin E.V., 12489 Berlin (DE)
(72) Erfinder: HENZE, Rico, 17291 Prenzlau (DE); THIES, Andreas, 14167 Berlin (DE); BENSON, Oliver, 12203 Berlin (DE)
(74) Vertreter: Fischer, Uwe
(86) Internationale Anmeldenummer: PCT/DE2013/200319
(87) Internationale Veröffentlichungsnummer: WO 2014/090243

(56) Entgegenhaltungen:
- EP-A1- 2 009 472
- JP-A- 2006 030 733
- SUGITA A ET AL: "BRIDGE-SUSPENDED SILICA-WAVEGUIDE THERMO-OPTIC PHASE SHIFTER AND ITS APPLICATION TO MACH-ZEHNDER TYPE OPTICAL SWITCH", TRANSACTIONS OF THE INSTITUTE OF ELECTRONICS, INFORMATIONAND COMMUNICATION ENGINEERS OF JAPAN, INST. OF ELECTRONICS & COMMUNIC. ENGINEERS OF JAPAN. TOKYO, JP, Bd. E73, Nr. 1, 1. Januar 1990 (1990-01-01), Seiten 105-108, XP000103975,

## Beschreibung

Die Erfindung bezieht sich auf eine Wellenleiteranordnung mit einem Substrat und mindestens einem streifenförmigen Wellenleiter aus einem wellenführenden Schichtmaterial, wobei sich der Streifenwellenleiter entlang einer Längsrichtung streifenförmig erstreckt und Wellen entlang seiner Längsrichtung derart führen kann, dass die Wellenausbreitungsrichtung der Längsrichtung des Streifenwellenleiters entspricht. Unter dem Begriff Wellenleiter werden hier Wellenleiter verstanden, die elektromagnetische Strahlung, insbesondere optische Strahlung (z. B. sichtbares oder unsichtbares Licht) entlang ihrer Längsrichtung leiten können. Derartige Wellenleiter werden fachsprachlich auch Lichtwellenleiter genannt.

Eine Wellenleiteranordnung mit Brückenstruktur mit Löchern an beiden Seiten der brückenförmigen Lichtleiterstruktur und einem Leerraum im Siliziumsubstrat unter der Lichtleiterstruktur verbunden mit den Löchern ist aus der japanischen Offenlegungsschrift JP 2006-30733 bekannt.

Wellenleiteranordnungen mit Stützen sind in der Offenlegungsschrift EP 2 009 472 A1 sowie in der Veröffentlichung "Bridge-Suspended Silica-Waveguide Thermo-Optic Phase Shifter and Its Application to Mach-Zehnder Type Optical Switch" (A. Sugita et al., The Transactions of the IEICE, Vol. E 73, No. 1, January, 1990) beschrieben.

Ein weiteres Konzept zur Wellenführung und zur Herstellung von Wellenleitern beruht auf der geschickten Kombination von Materialien mit unterschiedlichen Brechungsindizes zum Aufbau einer geschichteten Trägerstruktur. Bei diesen nichtresonanten reflektierenden optischen Wellenleitern (im Englischen auch kurz ARROWs (anti-resonant reflecting optical waveguides) genannt) kann der Brechungsindex des Wellenleiters auch kleiner sein als der des den Wellenleiter tragenden Substrats. Der Wellenleiter liegt aber bei dieser Art der Wellenleitung nicht direkt auf dem Substrat auf, sondern wird von diesem abwechselnd durch dünne Schichten sowohl aus Materialien mit hohem als auch mit niedrigem Brechungsindex getrennt. Durch diese Schichtung wird eine Art Spiegel gebildet, der es ermöglicht, eine lokalisierte Wellenführung des Wellenleiters gegenüber dem eigentlichen Substrat zu ermöglichen.

Eine weitere Methode zur Wellenführung besteht in der Auslegung eines Wellenleiters als zweidimensionale photonische Kristallstruktur. Bei zweidimensionalen photonischen Kristallstrukturen werden Bandeffekte genutzt. In der Regel werden innerhalb der wellenführenden Wellenleiterschicht mehrere Reihen gegeneinander versetzter Rundlöcher, welche durch ihre Größe, Formen und Verteilung in der Schicht die Funktionalität des Wellenleiters erzeugen, verwendet.

Der vorliegenden Erfindung liegt die Aufgabe zugrunde, eine stabile Wellenleiteranordnung anzugeben, die sich einfach und kostengünstig herstellen lässt und eine Wellenführung auch dann ermöglicht, wenn die Brechzahl des Wellenleitermaterials kleiner ist als die Brechzahl des darunterliegenden Substrates.

Diese Aufgabe wird erfindungsgemäß durch eine Wellenleiteranordnung mit den Merkmalen gemäß Patentanspruch 1 gelöst. Vorteilhafte Ausgestaltungen der erfindungsgemäßen Wellenleiteranordnung sind in Unteransprüchen angegeben.

Danach ist erfindungsgemäß eine Wellenleiteranordnung vorgesehen mit einem Substrat und mindestens einem streifenförmigen Streifenwellenleiter aus einem wellenführenden Schichtmaterial, wobei sich der Streifenwellenleiter entlang einer Längsrichtung streifenförmig erstreckt und Wellen entlang seiner Längsrichtung derart führen kann, dass die Wellenausbreitungsrichtung der Längsrichtung des Streifenwellenleiters entspricht, wobei der Brechungsindex des Substrates größer als der Brechungsindex des Schichtmaterials ist, wobei der Streifenwellenleiter zur vertikalen Wellenführung eine Wellenleiterbrücke bildet, die oberhalb einer Ausnehmung im Substrat angeordnet ist und dort zumindest abschnittsweise von dem Substrat räumlich getrennt ist und wobei die Wellenleiterbrücke durch mindestens eine Stütze abgestützt ist, die aus Substratmaterial besteht und sich vom Boden der Ausnehmung zu der Wellenleiterbrücke erstreckt und die Wellenleiterbrücke von unten abstützt.

Um eine stabile Brückenbildung zu ermöglichen, ist erfindungsgemäß vorgesehen, dass das Schichtmaterial außerhalb des Bereichs des Streifenwellenleiters zumindest einen Auflageabschnitt aufweist, in dem das Schichtmaterial mittelbar oder unmittelbar von dem Substrat getragen wird, und das Schichtmaterial im Nachbarbereich neben dem Wellenleiter laterale Haltestege bildet, die sich quer, insbesondere senkrecht, zur Längsrichtung des Streifenwellenleiters und damit quer zur Wellenausbreitungsrichtung von dem Auflageabschnitt zur Wellenleiterbrücke erstrecken und den Wellenleiter von der Seite her über dem Substrat hängend halten. Durch das Vorsehen zusätzlicher lateraler Haltestege ist es möglich, auch besonders lange Wellenleiterbrücken zu bilden, ohne dass die Gefahr eines Einstürzens der Wellenleiterbrücke besteht.

Erfindungsgemäß ist eine Vielzahl an lateralen Haltestegen vorhanden, wobei jeder der Haltestege jeweils durch zwei benachbarte und entlang der Wellenausbreitungsrichtung hintereinander liegende Löcher begrenzt ist, die sich durch das Schichtmaterial hindurch in das Substrat hinein erstrecken, den jeweiligen Haltesteg vom darunter liegenden Substrat trennen und mit der Ausnehmung unter der Wellenleiterbrücke in Verbindung stehen.

Ein wesentlicher Vorteil der erfindungsgemäßen Wellenleiteranordnung besteht darin, dass diese eine Wellenführung von Wellen in Schichtmaterial mit einem Brechungsindex ermöglicht, der geringer ist als der des das Schichtmaterial tragenden Substrats. Es ist somit möglich, das Licht in Material zu führen, das an andere Komponenten brechzahlmäßig besonders gut angepasst ist. So ist es beispielsweise möglich, als Schichtmaterial Glasmaterial zu wählen, dessen Brechungsindex dem Brechungsindex üblicher Lichtwellenleiterfasern entspricht. Durch die erfindungsgemäß vorgesehene Wellenleiterbrückenbildung ist es - im Unterschied zu den eingangs erwähnten Wellenleiterkonzepten - nicht nötig, den Streifenwellenleiter durch Zwischenschichten vom Substrat zu trennen und/oder ein Substrat mit einer besonders geringen Brechzahl zu wählen.

Um zu vermeiden, dass die lateralen Haltestege die Wellenausbreitung in Längsrichtung des Streifenwellenleiters stören oder dämpfen, wird es als vorteilhaft angesehen, wenn die Schichtdicke des Schichtmaterials im Bereich der lateralen Haltestege und/oder im Auflageabschnitt geringer ist als die Dicke des Schichtmaterials im wellenführenden Abschnitt des Streifenwellenleiters. Durch eine Reduktion der Schichtdicke des Schichtmaterials im Bereich der lateralen Haltestege und/oder im Auflageabschnitt lässt sich ein laterales Überkoppeln von Wellen in sehr einfacher Weise vermeiden, zumindest reduzieren.

Bei dem Schichtwellenleiter kann es sich um einen Rippenwellenleiter handeln, der einen wellenführenden Abschnitt aus dem Schichtmaterial und zwei daneben befindliche Randabschnitte aus dem Schichtmaterial aufweist, wobei der wellenführende Abschnitt eine erste Schichtdicke und die beiden daneben befindlichen Randabschnitte eine demgegenüber geringere zweite Schichtdicke aufweisen.

Vorzugsweise entspricht die Schichtdicke der Randabschnitte der Schichtdicke des Schichtmaterials im Auflageabschnitt und/oder der Schichtdicke der Haltestege.

Als besonders vorteilhaft wird es angesehen, wenn die Schichtdicke des Schichtmaterials im Bereich der Haltestege zwischen 5% und 50% der Dicke des Schichtmaterials im wellenführenden Abschnitt des Streifenwellenleiters beträgt.

Vorzugsweise liegt die Dicke des Schichtmaterials im Bereich des Streifenwellenleiters, insbesondere in dessen wellenführendem Abschnitt, zwischen dem 0,5- und 10-fachen der Wellenlänge der im Streifenwellenleiter geführten Strahlung.

Vorzugsweise liegt die Breite des Streifenwellenleiters, insbesondere in dessen wellenführendem Abschnitt, zwischen dem 0,5- und 10-fachen der Wellenlänge der im Streifenwellenleiter geführten Strahlung.

Vorzugsweise ist die mindestens eine Stütze senkrecht zur Längsrichtung des Streifenwellenleiters und senkrecht zur Wellenausbreitungsrichtung angeordnet.

Besonders bevorzugt weist die Wellenleiteranordnung eine Vielzahl an Stützen auf, wobei der Abstand zwischen den benachbarten Stützen variiert oder konstant ist.

Mit Blick auf das Materialsystem der Wellenleiteranordnung wird es als vorteilhaft angesehen, wenn das Substrat ein Siliziumsubstrat ist und das wellenführende Schichtmaterial aus einem Oxid, insbesondere Siliziumdioxid, oder einem Polymer besteht, das vorzugsweise unmittelbar auf dem Substrat aufliegt.

Weiterhin werden als Materialsysteme diejenigen Systeme als vorteilhaft angesehen, in denen ein Material, das potentiell zur Lichterzeugung eingesetzt werden kann, mit einem Material, das zur Lichtleitung geeignet ist, kombiniert wird. Solche Kombinationen sind zum Beispiel GaAs und davon abgeleitete ternäre Verbindungen wie AlGaAs oder InGaAs, InP und davon abgeleitete ternäre System wie InAlP, GaN und davon abgeleitete ternäre Systeme wie AlGaN, SiC und davon abgeleitete ternäre Systeme und zur Lichtleitung Siliziumoxide, Aluminiumoxide sowie DLC-Schichten (Diamond like carbon, diamantähnlicher Kohlenstoff). Generell können alle Schichten eingesetzt werden, die bei der zu führenden Wellenlänge geringe Dämpfung aufweisen.

Die Erfindung bezieht sich darüber hinaus auf ein Verfahren zum Herstellen einer Wellenleiteranordnung gemäss Anspruch 7.

Bezüglich der Vorteile des erfindungsgemäßen Verfahrens sei auf die obigen Ausführungen im Zusammenhang mit der erfindungsgemäßen Wellenleiteranordnung verwiesen, da die Vorteile der erfindungsgemäßen Wellenleiteranordnung denen des erfindungsgemäßen Verfahrens im Wesentlichen entsprechen.

Die Erfindung wird nachfolgend anhand eines Ausführungsbeispiels näher erläutert; dabei zeigen beispielhaft
- Figur 1: ein erstes Ausführungsbeispiel für eine Wellenleiteranordnung mit einem frei hängenden Rippenwellenleiter,
- Figur 2: ein Ausführungsbeispiel für eine Wellenleiteranordnung, bei der eine Wellenleiterbrücke durch laterale Haltestege gehalten wird,
- Figur 3: ein weiteres Ausführungsbeispiel für eine Wellenleiteranordnung in einer Sicht von oben,
- Figuren 4-12: beispielhaft ein Verfahren zum Herstellen der Wellenleiteranordnungen gemäß den Figuren 1 bis 3,
- Figur 13: ein Ausführungsbeispiel für eine Wellenleiteranordnung, bei der zur Abstützung einer Wellenleiterbrücke eine oder mehrere vertikale Stützen vorgesehen sind,
- Figur 14: das Ausführungsbeispiel gemäß Figur 13 im Querschnitt,
- Figur 15: ein Ausführungsbeispiel für eine Wellenleiteranordnung, bei der eine Wellenleiterbrücke durch eine oder mehrere Doppelstützen abgestützt wird, und
- Figur 16: eine Wellenleiteranordnung mit einem Schichtwellenleiter, der sich zunächst verjüngt und anschließend wieder erweitert.

In den Figuren werden der Übersicht halber für identische oder vergleichbare Komponenten stets dieselben Bezugszeichen verwendet.

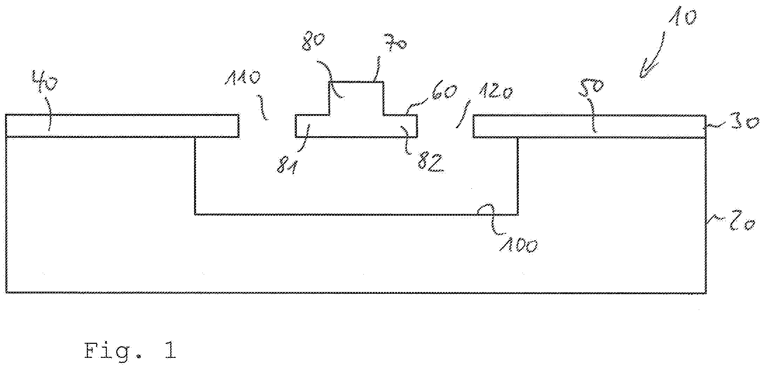

Die Figur 1 zeigt eine Wellenleiteranordnung 10, die durch ein Substrat 20 sowie ein auf dem Substrat 20 befindliches Schichtmaterial 30 gebildet ist. In Auflageabschnitten 40 und 50 des Schichtmaterials 30 liegt das Schichtmaterial 30 unmittelbar auf dem Substrat 20 auf.

Durch das Schichtmaterial 30 wird eine Wellenleiterbrücke 60 gebildet, in der ein Schichtwellenleiter beispielsweise in Form eines Rippenwellenleiters 70 ausgebildet ist. Die Wellenleiterbrücke 60 erstreckt sich bei der Darstellung gemäß Figur 1 senkrecht zur Bildebene; man sieht somit die Wellenleiterbrücke 60 in einem Querschnitt senkrecht zur Wellenleiterbrückenlängsrichtung. Der Rippenwellenleiter 70, dessen Längsrichtung sich bei der Darstellung gemäß Figur 1 parallel zur Längsrichtung der Wellenleiterbrücke 60 und damit ebenfalls senkrecht zur Bildebene erstreckt, umfasst einen wellenführenden Rippenabschnitt 80 sowie zwei seitliche Randabschnitte 81 und 82. In den beiden Randabschnitten 81 und 82 ist die Dicke des Schichtmaterials 30 kleiner als im wellenführenden Rippenabschnitt 80, so dass eine laterale Wellenführung durch den Rippenabschnitt 80 gewährleistet wird. Die Ausbreitungsrichtung der von dem Rippenwellenleiter 70 geführten Welle oder Wellen verläuft bei der Darstellung gemäß Figur 1 senkrecht zur Bildebene.
Die Figur 1 zeigt außerdem, dass die Wellenleiterbrücke 60 in vertikaler Richtung vom Substrat 20 getrennt ist, da das Substrat 20 im Bereich der Wellenleiterbrücke 60 eine Ausnehmung 100 aufweist. Die Ausnehmung 100 kann beispielsweise im Rahmen eines Ätzschrittes durch Unterätzen ausgehend von den Löchern 110 und 120 im Schichtmaterial 30 hergestellt worden sein. Die Ausnehmung 100 kann leer (Vakuum) sein oder mit Luft oder einem anderen Füllmaterial (z. B. Gas, Klebematerial, usw.) gefüllt sein, sofern dieses eine kleinere Brechzahl als das Schichtmaterial 30 aufweist.

Bei der Wellenleiteranordnung 10 ist die Brechzahl des Schichtmaterials 30 kleiner als die Brechzahl des Substrats 20, so dass eine vertikale Wellenführung ohne Brückenkonstruktion nicht möglich wäre, da die optische Welle sonst in das Substrat 20 einkoppeln würde. Durch die Ausnehmung 100 wird der Rippenwellenleiter 70 vom Substrat 20 getrennt, so dass die Welle vom Rippenwellenleiter 70 nicht in das Substrat 20 überkoppeln kann. Es wird also eine vertikale Wellenführung bei der Wellenleiteranordnung 10 erreicht, obwohl das Schichtmaterial 30 eine kleinere Brechzahl als das Substrat 20 aufweist.

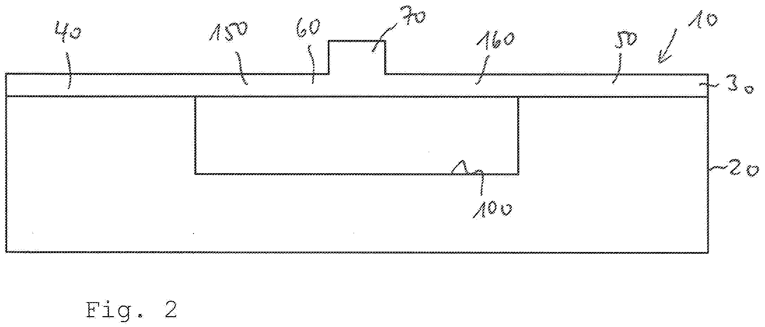

Die Figur 2 zeigt ein weiteres Ausführungsbeispiel für eine Wellenleiteranordnung 10, bei der ein Schichtmaterial 30 auf einem Substrat 20 aufgebracht ist. Das Schichtmaterial 30 weist eine kleinere Brechzahl als das Substrat 20 auf.

In dem Schichtmaterial 30 ist ein Rippenwellenleiter 70 ausgebildet, der eine über dem Substrat 20 hängende Wellenleiterbrücke 60 bildet. Der Rippenwellenleiter 70 und die Wellenleiterbrücke 60 sind in der Figur 2 (wie auch schon bei der Figur 1) senkrecht zur Bildebene angeordnet. Im Unterschied zu dem Ausführungsbeispiel gemäß Figur 1 ist bei der Wellenleiteranordnung 10 gemäß Figur 2 eine laterale Abstützung der Wellenleiterbrücke 60 über der Ausnehmung 100 realisiert, indem laterale Haltestege 150 und 160 vorgesehen sind, die sich von den beiden Auflageabschnitten 40 und 50 in Richtung Wellenleiterbrücke 60 erstrecken und die Wellenleiterbrücke 60 bzw. den Rippenwellenleiter 70 seitlich halten. Ein Durchhängen der Wellenleiterbrücke 60 bzw. ein Durchbrechen der Wellenleiterbrücke 60 in Richtung Substrat 20 wird durch die lateralen Haltestege 150 und 160 reduziert bzw. vermieden.

Die Herstellung der Struktur gemäß Figur 2 kann beispielsweise erfolgen, indem zunächst die Ausnehmung 100 in das Substrat 20 eingebracht und anschließend mit einem in der Figur 2 nicht gezeigten Füllmaterial ("Opfermaterial") gefüllt wird. Auf die Substratoberfläche außerhalb der Ausnehmung 100 sowie auf das Füllmaterial im Bereich der Ausnehmung 100 wird nachfolgend das Schichtmaterial 30 aufgebracht, und es wird der Rippenwellenleiter 70 gebildet. Nach Fertigstellung des Rippenwellenleiters 70 kann das Füllmaterial entfernt werden, sei es thermisch (z. B. durch Schmelzen), durch Auflösen mit einem Lösungsmittel oder durch Ätzen.

Um die Herstellung der Ausnehmung 100 in dem Substrat 20 zu vereinfachen, wird die Wellenleiterbrücke 60 vorzugsweise nicht überall mit lateralen Haltestegen 150 und 160 gehalten, sondern nur abschnittsweise. Die Wellenleiteranordnung 10 gemäß Figur 2 wird somit vorzugsweise an anderen Stellen, die in der Figur 2 nicht gezeigt sind, eine andere Struktur aufweisen, beispielsweise eine solche, wie sie in der Figur 1 gezeigt ist.

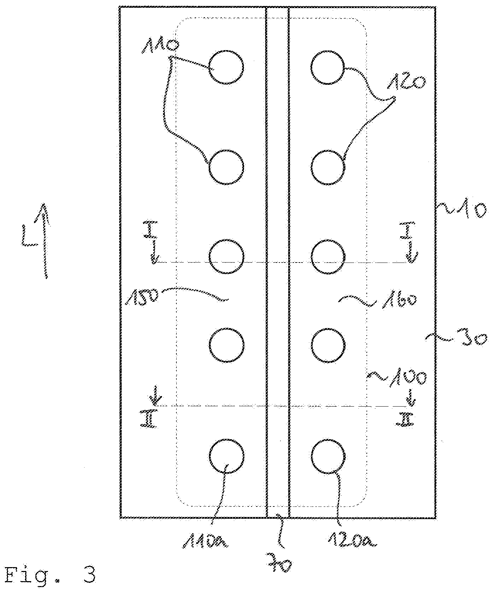

Die Figur 3 zeigt in einer Sicht von oben eine Wellenleiteranordnung 10, die im Querschnitt abschnittsweise so aussieht, wie die in Figur 1 und abschnittsweise so wie die in Figur 2. Man erkennt das Schichtmaterial 30, in dem Löcher 110 und 120 ausgebildet sind, die zwei Lochreihen 110a und 120a bilden. Die zwei Lochreihen 110a und 120a erstrecken sich entlang der Längsrichtung L des Rippenwellenleiters 70.

Durch die Löcher 110 und 120 kann das Substrat 20 zur Bildung der Ausnehmung 100 lokal entfernt werden, beispielsweise durch nasschemisches oder trockenchemisches Ätzen (vgl. Figuren 1 und 2). Durch den Abstand der Löcher 110 untereinander, durch den Abstand der Löcher 120 untereinander sowie durch das Ätzverhalten des Ätzmittels wird festgelegt, ob und in welcher Breite die lateralen Haltestege 150 und 160 ausgebildet werden, die die Wellenleiterbrücke 60 lokal lateral halten (vgl. Figur 2).

Bei dem Ausführungsbeispiel gemäß Figur 3 entspricht die Wellenleiteranordnung 10 an der Querschnittslinie I-I vom Querschnitt her der Wellenleiteranordnung gemäß Figur 1. An der Querschnittsfläche II-II sind die lateralen Haltestege 150 und 160 vorhanden, so dass sich ein Querschnitt ergibt, wie er in der Figur 2 gezeigt ist. Mit anderen Worten wird durch die Anordnung der Löcher 110 und 120 eine Wellenleiteranordnung 10 geschaffen, die abschnittsweise der in Figur 1 sowie abschnittsweise der in Figur 2 entspricht.

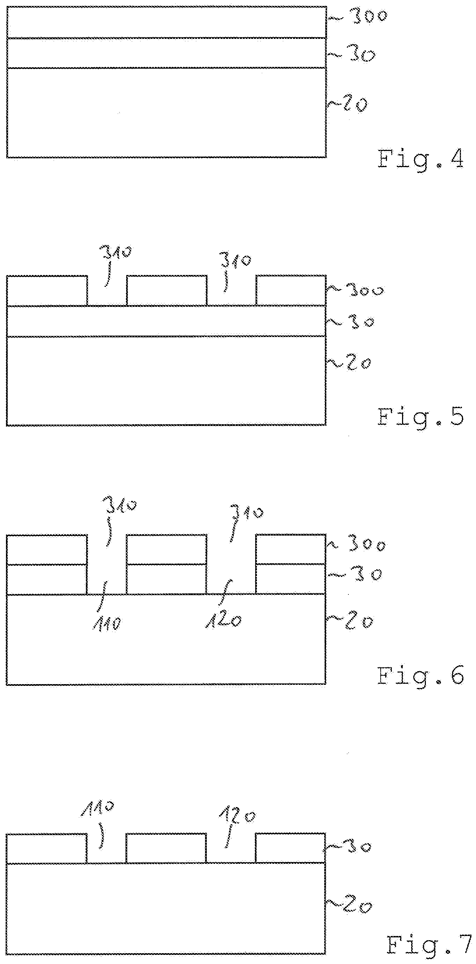

Im Zusammenhang mit den Figuren 4 bis 12 soll nachfolgend ein Ausführungsbeispiel zur Herstellung der Wellenleiteranordnung gemäß Figur 3 erläutert werden:
Zunächst wird auf ein Substrat 20 ein wellenführendes Schichtmaterial 30 aufgebracht. Zur Strukturierung des Schichtmaterials 30 wird auf das Schichtmaterial 30 ein Fotolack 300 aufgetragen (vgl. Figur 4).

Die Figur 5 zeigt die Struktur, nachdem der Fotolack 300 mittels eines fotolithographischen Schritts unter Bildung von Öffnungen 310 strukturiert wurde.

Mittels eines Ätzprozesses werden die Öffnungen 310 in das Schichtmaterial 30 übertragen, wodurch Löcher 110 und 120 in dem Schichtmaterial 30 gebildet werden (vgl. Figuren 3 und 6) .

Die Figur 7 zeigt die Struktur, nachdem der Fotolack 300 entfernt worden ist.

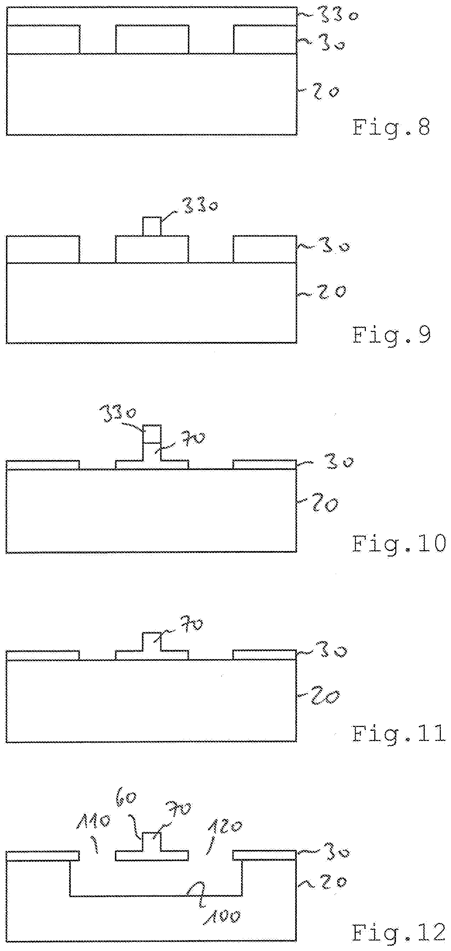

Anschließend wird eine weitere Fotolackschicht 330 aufgetragen (vgl. Figur 8). Nach einem erneuten Lithographieschritt ergibt sich eine Strukturierung der weiteren Fotolackschicht 330 zwecks Formung des späteren Wellenleiters 70 (vgl. Figuren 1, 2 und 9).

Die Figur 10 zeigt die resultierende Struktur, nachdem das Schichtmaterial 30 in den von der weiteren Fotolackschicht 330 nicht abgedeckten Bereichen durch Ätzen teilweise entfernt bzw. verdünnt worden ist. Es lässt sich erkennen, dass durch das Ätzen des Schichtmaterials 30 der Rippenwellenleiter 70 gebildet wird.

Die Figur 11 zeigt die resultierende Struktur, nachdem die weitere Fotolackschicht 330 entfernt worden ist.

Im Rahmen eines weiteren Ätzschrittes wird durch die Löcher 110 und 120 hindurch eine Ausnehmung 100 unterhalb des Rippenwellenleiters 70 geätzt, so dass eine Wellenleiterbrücke 60 entsteht, die frei über der Ausnehmung 100 im Substrat 20 hängt. Die Figur 12 zeigt die resultierende Struktur im Querschnitt. Das Ätzen der Ausnehmung 100 unterhalb der Wellenleiterbrücke 60 beruht auf einem Unterätzen durch eine geeignete Wahl des Ätzmittels. Bei dem Ätzmittel kann es sich beispielsweise um ein isotropes Ätzmittel handeln.

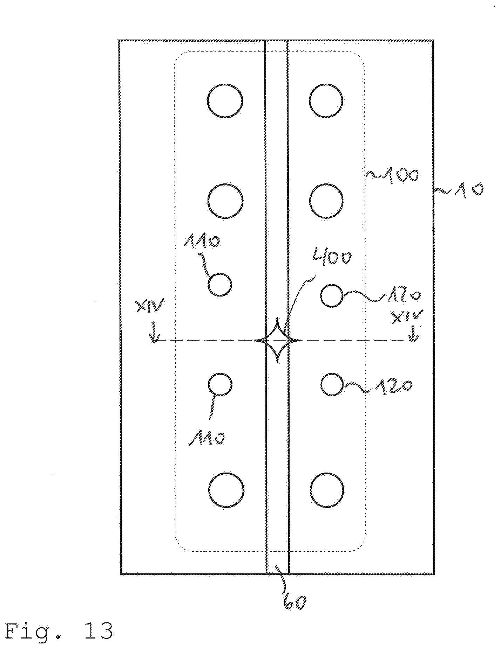

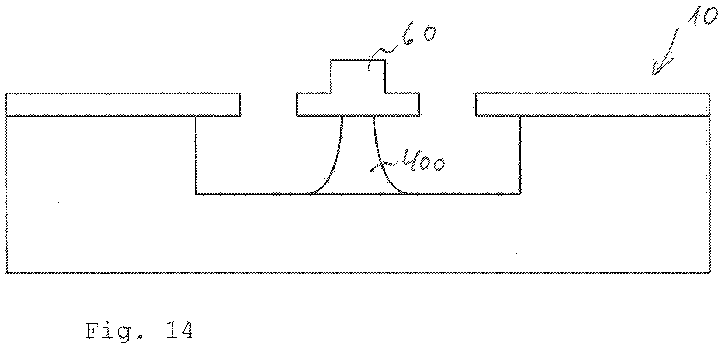

Die Figur 13 zeigt ein Ausführungsbeispiel für eine Wellenleiteranordnung 10, bei der durch die Größe der Löcher 110 und 120 neben der Wellenleiterbrücke 60 die Ausbildung einer vertikalen Stütze 400 (oder mehrerer vertikalen Stützen) aus Substratmaterial erreicht wird, die die Wellenleiterbrücke 60 auf dem Boden der Ausnehmung 100 mechanisch abstützt. Die Figur 14 zeigt den Querschnitt der Wellenleiteranordnung 10 entlang der Schnittlinie XIV-XIV gemäß Figur 13 im Bereich der Stütze 400. Man sieht, dass die Stütze 400 die Wellenleiterbrücke 60 vertikal stützt.

Zur Bildung der Stütze 400 werden die Löcher 110 und 120 im Bereich der Stütze 400 beispielsweise kleiner gewählt als in den übrigen Abschnitten der Wellenleiteranordnung 10, in denen keine Stützen ausgebildet werden sollen. Die Größe der Löcher 110 und 120 im Bereich der Stütze 400 wird vorzugsweise so gewählt, dass das seitliche Unterätzen des Substrats beim Herstellen der Ausnehmung 100 die Stütze 400 nicht erreichen kann.

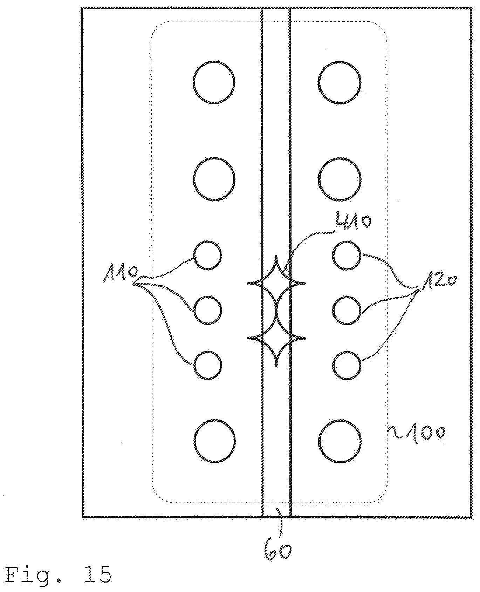

In der Figur 15 ist beispielhaft die Bildung einer Doppelstütze 410 aus Substratmaterial zum vertikalen Abstützen der Wellenleiterbrücke 60 auf dem Boden der Ausnehmung 100 dargestellt. Die Ausbildung der Doppelstütze 410 erfolgt durch eine entsprechende Wahl der Größe der Löcher 110 und 120 im Bereich der späteren Doppelstütze.

Zur Bildung der Doppelstütze 410 werden die Löcher 110 und 120 im Bereich der Doppelstütze 410 beispielsweise kleiner gewählt als in den übrigen Abschnitten der Wellenleiteranordnung 10, in denen keine Stützen 400 oder Doppelstützen 410 ausgebildet werden sollen. Die Größe der Löcher 110 und 120 im Bereich der Doppelstütze 410 wird vorzugsweise so gewählt, dass das seitliche Unterätzen des Substrats beim Herstellen der Ausnehmung 100 die Doppelstütze 410 nicht erreichen kann.

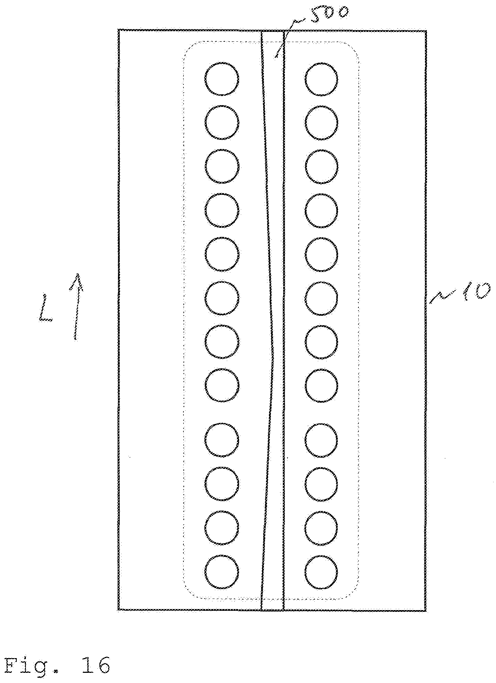

Die Figur 16 zeigt ein Ausführungsbeispiel für eine Wellenleiteranordnung 10, bei der ein Schichtwellenleiter 500 keine konstante Breite aufweist, sondern eine entlang der Ausbreitungsrichtung der Welle variable. Es lässt sich erkennen, dass sich die Breite entlang der Pfeilrichtung L gesehen verjüngt und anschließend wieder aufweitet. Die in der Figur 16 dargestellte Form des Schichtwellenleiters 500 ist hier nur beispielhaft zu verstehen. Alternativ kann der Schichtwellenleiter 500 auch gekrümmt, doppelseitig verjüngt oder mit anderen Wellenleitern verkoppelt sein.

Die im Zusammenhang mit den Figuren 1 bis 16 beispielhaft erläuterten Wellenleiteranordnungen können eine oder mehrere der folgenden Eigenschaften aufweisen:
- Der Querschnitt der Wellenleiter kann konstant sein.
- Der Querschnitt der Wellenleiter kann sich verjüngen oder vergrößern.
- Der Querschnitt der Wellenleiter kann rechteckig oder zumindest ungefähr rechteckig sein.
- Der Querschnitt des Wellenleiters kann verrundet sein.
- Die Wellenleiterdicke kann 100 bis 10000 nm betragen.
- Die Dicke des Schichtmaterials in den Randabschnitten und/oder im Bereich der lateralen Haltestege kann 5 bis 50% der Schichtdicke im wellenführenden Bereich des Schichtwellenleiters betragen.
- Die Löcher 110 und 120 können 1 bis 10 µm groß sein.
- Die Abstände zwischen den Löchern 110 und 120 können 1-bis 10-mal so groß sein wie der Lochdurchmesser der Löcher 110 und 120.
- Der Schichtwellenleiter kann gerade oder beliebig gekrümmt sein.
- Es können mehrere Wellenleiter, wie sie beschrieben worden sind, dicht nebeneinander strukturiert oder direkt miteinander verbunden werden, so dass die in den Wellenleitern geführten Wellen miteinander wechselwirken können.
- Es können mehrere Wellenleiter mit unterschiedlichen Querschnitten direkt hintereinander in der Wellenleiteranordnung vorgesehen werden.
- Die Enden der Schichtwellenleiter können innerhalb oder außerhalb des Substrats enden.
- Unterhalb des Schichtwellenleiters können eine oder mehrere Stützen aus Substratmaterial die Wellenleiterbrücke stabilisieren.
- Der Schichtwellenleiter und das Substrat können von Vakuum, Luft oder einem anderen beliebigen Medium mit einem Brechungsindex, der kleiner als der Brechungsindex des Schichtmaterials ist, umgeben sein.
- Der Abstand des Schichtwellenleiters zum Substrat beträgt vorzugsweise zwischen 100 nm und 10000 nm.
- Die Führung der Wellen erfolgt monomodal oder multimodal.
- Die Löcher 110 und 120 sowie die Ausnehmung 100 im Substrat können durch ein plasmatechnisches Verfahren oder ein chemisches Ätzverfahren hergestellt werden.
- Die Definition der Öffnungen erfolgt vorzugsweise im Rahmen eines photolithographischen Verfahrens.

### Bezugszeichenliste

- 10: Wellenleiteranordnung
- 20: Substrat
- 30: Schichtmaterial
- 40: Auflageabschnitt
- 50: Auflageabschnitt
- 60: Wellenleiterbrücke
- 70: Rippenwellenleiter
- 80: Rippenabschnitt
- 81: Randabschnitt
- 82: Randabschnitt
- 100: Ausnehmung
- 110: Loch
- 110a: Lochreihe
- 120: Loch
- 120a: Lochreihe
- 150: Haltesteg
- 160: Haltesteg
- 300: Fotolack
- 310: Öffnung
- 330: Fotolackschicht
- 400: Stütze
- 410: Doppelstütze
- 500: Schichtwellenleiter
- L: Längsrichtung

## Patentansprüche

1. Wellenleiteranordnung (10) mit einem Substrat (20) und mindestens einem streifenförmigen Streifenwellenleiter aus einem wellenführenden Schichtmaterial (30), wobei sich der Streifenwellenleiter entlang einer Längsrichtung streifenförmig erstreckt und Wellen entlang seiner Längsrichtung derart führen kann, dass die Wellenausbreitungsrichtung der Längsrichtung des Streifenwellenleiters entspricht,
- wobei der Brechungsindex des Substrates (20) größer als der Brechungsindex des Schichtmaterials (30) ist,
- wobei der Streifenwellenleiter eine Wellenleiterbrücke (60) bildet, die oberhalb einer Ausnehmung (100) im Substrat (20) angeordnet ist und dort zumindest abschnittsweise von dem Substrat (20) räumlich getrennt ist, und
- wobei die Wellenleiterbrücke (60) durch mindestens eine Stütze (400) abgestützt ist, die aus Substratmaterial besteht und sich vom Boden der Ausnehmung (100) zu der Wellenleiterbrücke (60) erstreckt und die Wellenleiterbrücke (60) von unten abstützt,
wobei das Schichtmaterial (30) außerhalb des Bereichs des Streifenwellenleiters zumindest einen Auflageabschnitt (40, 50) aufweist, in dem das Schichtmaterial (30) mittelbar oder unmittelbar von dem Substrat (20) getragen wird, und das Schichtmaterial (30) im Nachbarbereich neben dem Wellenleiter eine Vielzahl an lateralen Haltestegen (150, 160) bildet, die
- sich quer, insbesondere senkrecht, zur Längsrichtung des Streifenwellenleiters und damit quer zur Wellenausbreitungsrichtung von dem Auflageabschnitt (40, 50) zur Wellenleiterbrücke (60) erstrecken, und
- den Wellenleiter von der Seite her über dem Substrat (20) hängend halten,
- wobei jeder der Haltestege (150, 160) jeweils durch zwei benachbarte und entlang der Wellenausbreitungsrichtung hintereinander liegende Löcher (110, 120) begrenzt ist, die sich durch das Schichtmaterial (30) hindurch in das Substrat (20) hinein erstrecken, den jeweiligen Haltesteg (150, 160) vom darunter liegenden Substrat (20) trennen und mit der Ausnehmung (100) unter der Wellenleiterbrücke (60) in Verbindung stehen.

2. Wellenleiteranordnung (10) nach einem der voranstehenden Ansprüche,
**dadurch gekennzeichnet, dass**
die Schichtdicke des Schichtmaterials (30) im Bereich der lateralen Haltestege (150, 160) und/oder im Auflageabschnitt (40, 50) geringer ist als die Dicke des Schichtmaterials (30) im wellenführenden Abschnitt des Streifenwellenleiters.

3. Wellenleiteranordnung (10) nach einem der voranstehenden Ansprüche,
**dadurch gekennzeichnet, dass**
- der Streifenwellenleiter ein Rippenwellenleiter (70) ist, der einen wellenführenden Abschnitt (80) aus dem Schichtmaterial (30) und zwei daneben befindliche Randabschnitte (81, 82) aus dem Schichtmaterial (30) aufweist,
- wobei der wellenführende Abschnitt (80) eine erste Schichtdicke und die beiden daneben befindlichen Randabschnitte (81, 82) eine demgegenüber geringere zweite Schichtdicke aufweisen.

4. Wellenleiteranordnung (10) nach Anspruch 3, **dadurch gekennzeichnet, dass**
die Schichtdicke der Randabschnitte (81, 82) der Schichtdicke des Schichtmaterials (30) im Auflageabschnitt(40, 50) und/oder der Schichtdicke der Haltestege (150, 160) entspricht.

5. Wellenleiteranordnung (10) nach einem der voranstehenden Ansprüche 3-4, **dadurch gekennzeichnet, dass**
die Schichtdicke des Schichtmaterials (30) im Bereich der Haltestege (150, 160) zwischen 5% und 50% der Dicke des Schichtmaterials (30) im wellenführenden Abschnitt des Streifenwellenleiters beträgt.

6. Wellenleiteranordnung (10) nach einem der voranstehenden Ansprüche,
**dadurch gekennzeichnet, dass**
die Wellenleiteranordnung eine Vielzahl an Stützen aufweist, wobei der Abstand zwischen den benachbarten Stützen variiert oder konstant ist.

7. Verfahren zum Herstellen einer Wellenleiteranordnung (10), bei dem
- aus zumindest einem mittelbar oder unmittelbar auf einem Substrat (20) befindlichen wellenführenden Schichtmaterial (30) mindestens ein Streifenwellenleiter gebildet wird, der sich entlang einer Längsrichtung erstreckt und Wellen entlang seiner Längsrichtung derart führen kann, dass die Wellenausbreitungsrichtung der Längsrichtung des Streifenwellenleiters entspricht, wobei das wellenführende Schichtmaterial (30) einen kleineren Brechungsindex als das Substrat (20) aufweist,
- zumindest eine Ausnehmung (100) in das Schichtmaterial (30) und das Substrat (20) eingebracht und zumindest eine den Streifenwellenleiter umfassende Wellenleiterbrücke (60) hergestellt wird, die zumindest abschnittsweise von dem Substrat (20) räumlich getrennt ist, und
- die Wellenleiterbrücke (60) durch mindestens eine Stütze (400) abgestützt wird, die aus Substratmaterial besteht und sich vom Boden der Ausnehmung (100) zu der Wellenleiterbrücke (60) erstreckt und die Wellenleiterbrücke (60) von unten abstützt,
- wobei das Schichtmaterial (30) außerhalb des Bereichs des Streifenwellenleiters zumindest einen Auflageabschnitt (40, 50) aufweist, in dem das Schichtmaterial (30) mittelbar oder unmittelbar von dem Substrat (20) getragen wird, und mit dem Schichtmaterial (30) im Nachbarbereich neben dem Wellenleiter eine Vielzahl an lateralen Haltestegen (150, 160) gebildet wird, die sich quer, insbesondere senkrecht, zur Längsrichtung des Streifenwellenleiters und damit quer zur Wellenausbreitungsrichtung von dem Auflageabschnitt (40, 50) zur Wellenleiterbrücke (60) erstrecken, und den Wellenleiter von der Seite her über dem Substrat (20) hängend halten, und
- wobei jeder der Haltestege (150, 160) jeweils durch zwei benachbarte und entlang der Wellenausbreitungsrichtung hintereinander liegende Löcher (110, 120) begrenzt wird, die sich durch das Schichtmaterial (30) hindurch in das Substrat (20) hinein erstrecken, den jeweiligen Haltesteg (150, 160) vom darunter liegenden Substrat (20) trennen und mit der Ausnehmung (100) unter der Wellenleiterbrücke (60) in Verbindung stehen.

8. Verfahren nach dem voranstehenden Anspruch 7, folgende Schritte umfassend:
- Aufbringen eines wellenführenden Schichtmaterials (30) auf ein Substrat (20),
- Auftragen von Fotolack (300) auf das Schichtmaterial (30),
- Bilden von Öffnungen (310) durch Strukturierung des Fotolacks (300) mittels eines fotolithographischen Schritts,
- Bilden von Löchern (110, 120) in dem Schichtmaterial (30) durch Übertragung der Öffnungen (310) in das Schichtmaterial (30) mittels eines Ätzprozesses,
- Entfernen des Fotolacks (300),
- Auftragen einer weiteren Fotolackschicht (330),
- Strukturieren der weiteren Fotolackschicht (330) durch einen erneuten Lithographieschritt,
- teilweises Entfernen bzw. Verdünnen des Schichtmaterials (30) in den von der weiteren Fotolackschicht (330) nicht abgedeckten Bereichen durch Ätzen zur Bildung eines Rippenwellenleiters (70),
- Entfernen der weiteren Fotolackschicht (330), und
- Ausbilden einer Wellenleiterbrücke (60) durch Ätzen einer Ausnehmung (100) unterhalb des Rippenwellenleiters (70) durch die Löcher (110, 120) im Rahmen eines weiteren Ätzschrittes, wobei durch die Größe der Löcher (110, 120) neben der Wellenleiterbrücke (60) eine oder mehrere vertikale Stützen (400, 410) aus Substratmaterial ausgebildet werden, die die Wellenleiterbrücke (60) auf dem Boden der Ausnehmung (100) mechanisch abstützen.

## Claims

1. Waveguide arrangement (10) having a substrate (20) and at least one strip-shaped strip waveguide made from a waveguiding layer material (30), wherein the strip waveguide extends in the shape of a strip along a longitudinal direction and can guide waves along its longitudinal direction in such a way that the wave propagation direction corresponds to the longitudinal direction of the strip waveguide,
- wherein the refractive index of the substrate (20) is greater than the refractive index of the layer material (30), and
- wherein the strip waveguide forms a waveguide bridge (60) which is arranged above a recess (100) in the substrate (20) and is at least regionally spatially separated there from the substrate (20), and
- wherein the waveguide bridge (60) is supported by at least one support (400) which consists of substrate material, extends from the bottom of the recess (100) to the waveguide bridge (60) and supports the waveguide bridge (60) from below,
- wherein the layer material (30) has, outside the region of the strip waveguide, at least one bearing section (40, 50) in which the layer material (30) is carried indirectly or directly by the substrate (20), and the layer material (30) forms, in the neighbouring region next to the waveguide, a multiplicity of lateral holding webs (150, 160) which
- extend transversely, in particular perpendicularly, to the longitudinal direction of the strip waveguide and therefore transversely to the wave propagation direction from the bearing section (40, 50) to the waveguide bridge (60), and
- hold from the side the waveguide overhanging the substrate (20),
- wherein each of the holding webs (150, 160) is respectively bounded by two neighbouring holes (110, 120), lying behind one another along the wave propagation direction, which extend through the layer material (30) into the substrate (20), separate the respective holding web (150, 160) from the underlying substrate (20) and are connected to the recess (100) under the waveguide bridge (60).

2. Waveguide arrangement (10) according to one of the preceding claims,
**characterized in that**
the layer thickness of the layer material (30) in the region of the lateral holding webs (150, 160) and/or in the bearing section (40, 50) is less than the thickness of the layer material (30) in the waveguiding section of the strip waveguide.

3. Waveguide arrangement (10) according to one of the preceding claims,
**characterized in that**
- the strip waveguide is a rib waveguide (70) which has a waveguiding section (80) made from the layer material (30) and two peripheral sections (81, 82) adjacent thereto made from the layer material (30),
- wherein the waveguiding section (80) has a first layer thickness and the two peripheral sections (81, 82) adjacent thereto have a second layer thickness that is smaller by comparison.

4. Waveguide arrangement (10) according to Claim 3,
**characterized in that**
the layer thickness of the peripheral sections (81, 82) corresponds to the layer thickness of the layer material (30) in the bearing section (40, 50) and/or to the layer thickness of the holding webs (150, 160).

5. Waveguide arrangement (10) according to one of the preceding Claims 3-4,
**characterized in that**
the layer thickness of the layer material (30) in the region of the holding webs (150, 160) is between 5% and 50% of the thickness of the layer material (30) in the waveguiding section of the strip waveguide.

6. Waveguide arrangement (10) according to one of the preceding claims,
**characterized in that**
the waveguide arrangement has a multiplicity of supports, wherein the distance between the neighbouring supports varies or is constant.

7. Method for producing a waveguide arrangement (10), wherein
- at least one strip waveguide, which extends along a longitudinal direction and can guide waves along its longitudinal direction in such a way that the wave propagation direction corresponds to the longitudinal direction of the strip waveguide, is formed from at least one waveguiding layer material (30) located indirectly or directly on a substrate (20), wherein the waveguiding layer material (30) has a lower refractive index than the substrate (20),
- at least one recess (100) is introduced into the layer material (30) and the substrate (20), and at least one waveguide bridge (60) comprising the strip waveguide, which is at least regionally spatially separated from the substrate (20), is produced, and
- the waveguide bridge (60) is supported by at least one support (400) which consists of substrate material, extends from the bottom of the recess (100) to the waveguide bridge (60) and supports the waveguide bridge (60) from below,
- wherein the layer material (30) has, outside the region of the strip waveguide, at least one bearing section (40, 50) in which the layer material (30) is carried indirectly or directly by the substrate (20), and a multiplicity of lateral holding webs (150, 160) is formed with the layer material (30) in the neighbouring region adjacent to the waveguide, which holding webs extend transversely, in particular perpendicularly, to the longitudinal direction of the strip waveguide and therefore transversely to the wave propagation direction from the bearing section (40, 50) to the waveguide bridge (60), and hold from the side the waveguide overhanging the substrate (20), and
- wherein each of the holding webs (150, 160) is respectively bounded by two neighbouring holes (110, 120), lying behind one another along the wave propagation direction, which extend through the layer material (30) into the substrate (20), separate the respective holding web (150, 160) from the underlying substrate (20) and are connected to the recess (100) under the waveguide bridge (60).

8. Method according to the preceding Claim 7, comprising the steps of:
- applying a waveguiding layer material (30) on a substrate (20),
- applying a photoresist (300) onto the layer material (30),
- forming openings (310) by structuring the photoresist (300) using a photolithographic step,
- forming holes (110, 120) in the layer material (30) by transferring the openings (310) into the layer material (30) using an etching process,
- removing the photoresist (300),
- applying a further photoresist layer (330),
- structuring the further photoresist layer (330) by another lithography step,
- partially removing or thinning the layer material (30) in the regions that are not covered by the further photoresist layer (330) by etching to form a rib waveguide (70),
- removing the further photoresist layer (330), and
- forming a waveguide bridge (60) by etching a recess (100) below the rib waveguide (70) through the holes (110, 120) as part of a further etching step, wherein, due to the size of the holes (110, 120), one or more vertical supports (400, 410), made from substrate material, which mechanically support the waveguide bridge (60) on the bottom of the recess (100) are formed adjacent to the waveguide bridge (60).

## Revendications

1. Arrangement guide d'ondes (10) comprenant un substrat (20) et au moins un guide d'ondes à ruban en forme de ruban en un matériau stratifié (30) guidant les ondes, le guide d'ondes à ruban s'étendant en forme de ruban le long d'une direction longitudinale et pouvant guider des ondes le long de sa direction longitudinale de telle sorte que le sens de propagation des ondes correspond à la direction longitudinale du guide d'ondes à ruban,
- l'indice de réfraction du substrat (20) étant supérieur à l'indice de réfraction du matériau stratifié (30),
- le guide d'ondes à ruban formant un pont guide d'ondes (60) qui est disposé au-dessus d'une cavité (100) dans le substrat (20) et y est séparé spatialement du substrat (20) au moins dans certaines portions, et
- le pont guide d'ondes (60) étant soutenu par au moins un montant (400) qui se compose de matériau de substrat et s'étend du fond de la cavité (100) jusqu'au pont guide d'ondes (60) et soutient le pont guide d'ondes (60) par le dessous,
le matériau stratifié (30) possédant, en-dehors de la zone du guide d'ondes à ruban, au moins une portion d'appui (40, 50) dans laquelle le matériau stratifié (30) est porté directement ou indirectement par le substrat (20), et le matériau stratifié (30), dans la zone voisine à côté du guide d'ondes, formant une pluralité de barrettes de maintien (150, 160) latérales qui
- s'étendent transversalement, notamment perpendiculairement, à la direction longitudinale du guide d'ondes à ruban et ainsi transversalement par rapport au sens de propagation des ondes de la portion d'appui (40, 50) vers le pont guide d'ondes (60), et
- maintiennent le guide d'ondes par le côté suspendu au-dessus du substrat (20),
- chacune des barrettes de maintien (150, 160) étant respectivement délimitée par deux trous (110, 120) voisins et se trouvant l'un derrière l'autre le long du sens de propagation des ondes, lesquels s'étendent à travers le matériau stratifié (30) à l'intérieur du substrat (20), séparent la barrette de maintien (150, 160) respective du substrat (20) qui se trouve au-dessous et sont en liaison avec la cavité (100) sous le pont guide d'ondes (60).

2. Arrangement guide d'ondes (10) selon l'une des revendications précédentes, **caractérisé en ce que** l'épaisseur de couche du matériau stratifié (30) dans la zone des barrettes de maintien (150, 160) latérales et/ou dans la portion d'appui (40, 50) est inférieure à l'épaisseur du matériau stratifié (30) dans la portion de guidage d'ondes du guide d'ondes à ruban.

3. Arrangement guide d'ondes (10) selon l'une des revendications précédentes, **caractérisé en ce que**
- le guide d'ondes à ruban est un guide d'ondes nervuré (70) qui possède une portion de guidage d'ondes (80) constituée du matériau stratifié (30) et de deux portions de bordure (81, 82) constituées du matériau stratifié (30) qui se trouvent à côté,
- la portion de guidage d'ondes (80) possédant une première épaisseur de couche et les deux portions de bordure (81, 82) qui se trouvent à côté de celle-ci une deuxième épaisseur de couche plus petite par rapport à celle-ci.

4. Arrangement guide d'ondes (10) selon la revendication 3, **caractérisé en ce que** l'épaisseur de couche des portions de bordure (81, 82) correspond à l'épaisseur de couche du matériau stratifié (30) dans la portion d'appui (40, 50) et/ou à l'épaisseur de couche des barrettes de maintien (150, 160).

5. Arrangement guide d'ondes (10) selon l'une des revendications précédentes 3 et 4, **caractérisé en ce que** l'épaisseur de couche du matériau stratifié (30) dans la zone des barrettes de maintien (150, 160) est comprise entre 5 % et 50 % de l'épaisseur du matériau stratifié (30) dans la portion de guidage d'ondes du guide d'ondes à ruban.

6. Arrangement guide d'ondes (10) selon l'une des revendications précédentes, **caractérisé en ce que** l'arrangement guide d'ondes possède une pluralité de montants, l'écart entre les montants voisins étant variable ou constant.

7. Procédé de fabrication d'un arrangement guide d'ondes (10), selon lequel
- à partir d'au moins un matériau stratifié (30) guidant les ondes qui se trouve directement ou indirectement sur un substrat (20) est formé au moins un guide d'ondes à ruban, lequel s'étend le long d'une direction longitudinale et peut guider des ondes le long de sa direction longitudinale de telle sorte que le sens de propagation des ondes correspond à la direction longitudinale du guide d'ondes à ruban, le matériau stratifié (30) guidant les ondes possédant un indice de réfraction inférieur à celui du substrat (20),
- au moins une cavité (100) est pratiquée dans le matériau stratifié (30) et le substrat (20) et au moins un pont guide d'ondes (60) comprenant le guide d'ondes à ruban est produit, lequel est séparé spatialement du substrat (20) au moins dans certaines portions, et
- le pont guide d'ondes (60) est soutenu par au moins un montant (400) qui se compose de matériau de substrat et s'étend du fond de la cavité (100) jusqu'au pont guide d'ondes (60) et soutient le pont guide d'ondes (60) par le dessous,
- le matériau stratifié (30) possédant, en-dehors de la zone du guide d'ondes à ruban, au moins une portion d'appui (40, 50) dans laquelle le matériau stratifié (30) est porté directement ou indirectement par le substrat (20), et une pluralité de barrettes de maintien (150, 160) latérales étant formées avec le matériau stratifié (30) dans la zone voisine à côté du guide d'ondes, lesquelles s'étendent transversalement, notamment perpendiculairement, à la direction longitudinale du guide d'ondes à ruban et ainsi transversalement par rapport au sens de propagation des ondes de la portion d'appui (40, 50) vers le pont guide d'ondes (60), et maintiennent le guide d'ondes par le côté suspendu au-dessus du substrat (20), et
- chacune des barrettes de maintien (150, 160) étant respectivement délimitée par deux trous (110, 120) voisins et se trouvant l'un derrière l'autre le long du sens de propagation des ondes, lesquels s'étendent à travers le matériau stratifié (30) à l'intérieur du substrat (20), séparent la barrette de maintien (150, 160) respective du substrat (20) qui se trouve au-dessous et sont en liaison avec la cavité (100) sous le pont guide d'ondes (60).

8. Procédé selon la revendication précédente 7, comprenant les étapes suivantes :
- application d'un matériau stratifié (30) guidant les ondes sur un substrat (20),
- application d'un vernis photosensible (300) sur le matériau stratifié (30),
- formation d'ouvertures (310) par structuration du vernis photosensible (300) au moyen d'une étape de photolithographie,
- formation de trous (110, 120) dans le matériau stratifié (30) par transfert des ouvertures (310) dans le matériau stratifié (30) au moyen d'un processus de gravure,
- enlèvement du vernis photosensible (300),
- application d'une couche de vernis photosensible (330) supplémentaire,
- structuration de la couche de vernis photosensible (330) supplémentaire par une nouvelle étape de lithographie,
- enlèvement ou dilution partiel(le) du matériau stratifié (30) dans les zones non recouvertes de la couche de vernis photosensible (330) supplémentaire par gravure en vue de former un guide d'ondes nervuré (70),
- enlèvement de la couche de vernis photosensible (330) supplémentaire, et
- formation d'un pont guide d'ondes (60) par gravure d'une cavité (100) au-dessous du guide d'ondes nervuré (70) à travers les trous (110, 120) dans le cadre d'une étape de gravure supplémentaire, un ou plusieurs montants (400, 410) verticaux en matériau de substrat étant formés par la taille des trous (110, 120) à côté du pont guide d'ondes (60), lesquels soutiennent mécaniquement le pont guide d'ondes (60) sur le fond de la cavité (100).
